# EUROPÄISCHE PATENTSCHRIFT

(11) **EP 0 623 829 B1**
(45) Veröffentlichungstag und Bekanntmachung des Hinweises auf die Patenterteilung: **15.10.1997**
(21) Anmeldenummer: 94104974.4
(22) Anmeldetag: 29.03.1994
(51) Int. Cl.: G01S 7/48

(54) **Verfahren und Vorrichtung zur Sendestromregelung bei Sensoranordnungen**
Method and device of controlling the transmitter current of sensor arrangements
Procédé et dispositif pour régler le courant d'émetteur dans des arrangements capteurs

(30) Priorität: 14.04.1993 DE 4312186
(43) Veröffentlichungstag der Anmeldung: 09.11.1994
(73) Patentinhaber: SICK AG, 79183 Waldkirch (DE)
(72) Erfinder: Merettig, Gerhard, D-79379 Müllheim (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 328 136
- DE-A- 2 408 960
- US-A- 3 830 567
- PATENT ABSTRACTS OF JAPAN vol. 17, no. 585 (P-1632) 25. Oktober 1993 & JP-A-05 172 565 (SHARP) 9. Juli 1993

## Beschreibung

Die Erfindung betrifft ein Verfahren zum Betrieb einer insbesondere als Lichttaster ausgebildeten Sensoranordnung zur Feststellung von in einem Überwachungsbereich vorhandenen Gegenständen und/oder zur Feststellung deren Position nach dem Oberbegriff des Anspruchs 1 sowie ein Verfahren zum Betrieb eines insbesondere als Lichttaster ausgebildeten Triangulationstasters zur Feststellung von in einer vorgebbaren Entfernung zum Triangulationstaster befindlichen und sich relativ zu diesem bewegenden reflektierenden Gegenständen gemäß dem Oberbegriff des Anspruchs 2. Weiterhin ist die Erfindung auf Vorrichtungen zur Durchführung der Verfahren ausgerichtet.

Aus der EP-A-0 328 136 ist eine Vorrichtung zur Entfernungsmessung bekannt, welche auf dem Triangulationsprinzip basiert. In dieser Vorrichtung ist ein Lichtsender enthalten, welcher eine Sequenz aufeinanderfolgender Licht-Impulse aussendet, die von einem zu erfassenden Gegenstand reflektiert und von einem Lichtempfänger empfangen und verarbeitet wird.

Aus der DE-A-2 408 960 ist eine Einrichtung zur Erfassung des Abstandes zwischen einem Sende-Empfangsgerät für elektromagnetische Wellen und einem Hindernis oder Zielobjekt bekannt, welches einen Teil der auf dieses auftreffenden elektromagnetischen Strahlungsenergie reflektiert. Die Einrichtung weist einen Sender und einen Empfänger für elektromagnetische Strahlungsimpulse sowie eine Auswerteeinrichtung auf. Falls der Empfänger ein genügend starkes reflektiertes Signal aufnimmt, wird bei dieser Einrichtung die Impulsfolgefrequenz der ausgesendeten Strahlungsimpulse der Rückkehrzeit des reflektierten Signales zum Empfänger nach der Reflexion am Zielobjekt angepaßt.

Bei als Lichtschranken ausgebildeten Sensoranordnungen der eingangs genannten Art besteht beispielsweise die Möglichkeit, den vom Sender ausgesandten Lichtstrahl von einem Reflektor reflektieren zu lassen und den reflektierten Lichtstrahl mit einem Empfänger zu empfangen, der daraus ein elektrisches Signal erzeugt. Tritt ein Gegenstand in den Lichtstrahl ein, so wird dieser unterbrochen und das vom Empfänger erzeugte elektrische Signal wird zu Null. Dadurch kann das Eintreten eines Gegenstands in den Bereich des Lichtstrahls erkannt werden.

Bei als Lichttaster ausgebildeten Sensoranordnungen der angegebenen Art wird der Lichtstrahl in den zu untersuchenden Raum abgestrahlt, wobei ein zu detektierender, in diesem Raum vorhandener Gegenstand den Lichtstrahl insbesondere als Streulicht zum Empfänger reflektiert. Das bedeutet, daß durch ein vom Empfänger erzeugtes elektrisches Signal das Vorhandensein eines Gegenstandes im Bereich des Lichtstrahles erkannt wird.

Im ersten Fall ist es möglich, daß beispielsweise das im Überwachungsraum vorhandene Medium den Lichtstrahl zu stark dämpft, wodurch eine hohe Störanfälligkeit der Sensoranordnung entsteht.

Im zweiten Fall tritt das Problem auf, daß die empfangene Lichtstärke von den Reflexionseigenschaften des in den Lichtstrahl eintretenden Gegenstandes abhängt. Je schlechter die Reflexionseigenschaften des Gegenstandes sind, d. h. beispielsweise je dunkler oder je matter die Oberfläche des Gegenstandes ist, desto niedriger ist die vom Empfänger empfangene Lichtstärke und damit auch das vom Empfänger erzeugte elektrische Signal. Ein Sender wird in der Regel mit dem in seiner Anwendungsumgebung maximal zulässigen Sendestrom betrieben. Die Empfangssignalauswertung muß auf die niedrigste auszuwertende Lichtstärke dimensioniert werden. Durch die Verringerung dieser Empfangssignalauswerteschwelle ist eine erhöhte Störanfälligkeit der Taster gegeben.

Regelt man nun die Amplitude der Sendeimpulse - wie z.B. in EP-A-0 328 136 vorgeschlagen - so nach, daß bei unterschiedlichen Reflexionseigenschaften von Gegenständen immer das gleiche Empfangssignal erzeugt wird, so erhält man zum einen den Nachteil, daß die Sendediode bei gut reflektierenden Gegenständen nur mit einem geringen Sendestrom beaufschlagt wird, wodurch die maximal mögliche Störunterdrückung nicht erreicht wird. Zum anderen kann durch einen Herabregelung der Sendeamplitude das ausgesandte Licht so dunkel werden, daß es für Justiervorgänge nicht mehr verwendet werden kann.

Es ist daher eine Aufgabe der Erfindung, ein Verfahren und eine Vorrichtung zur Regelung des pulsförmigen Sendesignals eines Triangulationstasters anzugeben, welche sowohl auf Sende- als auch auf Empfangsseite möglichst störunanfällig sind, und bei denen insbesondere die ausgestrahlte Lichtmenge in allen Fällen so hoch ist, daß sie für Justiervorgänge verwendet werden kann.

Sensoranordnungen der eingangs beschriebenen Art werden beispielsweise zur Bestimmung der Lage von stationären oder sich bewegenden, reflektierenden Gegenständen verwendet. So wird beispielsweise ein sich auf einem Fließband fortbewegender Gegenstand von einem Lichtstrahl angestrahlt, der von dem Gegenstand reflektierte Strahl von einem Empfänger empfangen und in ein entsprechendes elektrisches Signal umgewandelt. Um nun zu erkennen, ob der angestrahlte Gegenstand eine bestimmte Stelle auf dem Fließband erreicht hat, sind der Sender und zwei unmittelbar aneinander angrenzende Empfänger so bezüglich des Fließbandes positioniert, daß der reflektierte Lichtstrahl aufgrund der Bewegung des Gegenstandes zunächst über den ersten Empfänger und anschließend über den zweiten Empfänger gleitet, so daß ab einer bestimmten Entfernung des Gegenstandes vom Empfänger zunächst der erste Empfänger ein elektrisches Signal erzeugt. Bei einer Weiterbewegung des Gegenstandes bedeckt der Lichtstrahl sowohl einen Teil des ersten als auch einen Teil des zweiten Empfängers und anschließend nur noch den zweiten Empfänger, so daß zunächst von beiden Empfängern und zuletzt nur noch von dem zweiten Empfänger ein elektrisches Signal erzeugt wird.

Um das Erreichen einer bestimmten Position durch den Gegenstand erkennen zu können, werden der Sender und die beiden Empfänger so positioniert, daß an der zu erkennenden Position des Gegenstandes der reflektierte Lichtstrahl zu jeweils gleichen Teilen auf den ersten und den zweiten Empfänger trifft. Bildet man das Differenzsignal der beiden von den beiden Empfängern erzeugten elektrischen Signale, so erhält man in dieser Position den Nulldurchgang des Differenzsignals, da beide Empfänger dasselbe elektrische Signal erzeugen. Das bedeutet, daß durch den Nulldurchgang des Differenzsignals die exakte Position des Gegenstandes bestimmt werden kann.

In der Praxis wird jedoch der Nulldurchgang des Differenzsignals nicht zur Auswertung verwendet, da zum einen aufgrund von Störimpulsen und Rauschen die Auswertung des Nulldurchgangs zu unkorrekten Ergebnissen führen kann. Zum anderen wird üblicherweise das Erreichen der genannten Position durch ein Einschaltsignal und das Verlassen der Position durch ein Ausschaltsignal gekennzeichnet. Für diese Funktion ist jedoch die Verwendung einer Hysterese notwendig, da sonst bei Erreichen des Nullpunktes ein ständiges Ein-/Ausschalten der Anlage die Folge wäre.

Da aufgrund der unterschiedlichen Reflexionseigenschaften der Gegenstände die erzeugten Empfangssignale unterschiedliche Amplituden aufweisen, besitzt das Differenzsignal für gut reflektierende Gegenstände einen deutlich steileren Verlauf im Bereich des Nulldurchganges als das Differenzsignal eines schlecht reflektierenden Gegenstandes. Verwendet man daher zur Bestimmung des Ein- und Ausschaltzeitpunktes einen festen Amplitudenwert des Differenzsignals kurz vor bzw. kurz nach dem Nulldurchgang, so erhält man abhängig von den Reflexionseigenschaften des Gegenstandes unterschiedliche Ein- und Ausschaltzeitpunkte. Daher ist auf diese Weise keine exakte Bestimmung der Position eines Gegenstandes unabhängig von dessen Reflexionseigenschaften möglich.

Aufgabe der Erfindung ist es daher weiterhin, ein Verfahren und eine Vorrichtung zur Bestimmung der Lage von stationären oder sich bewegenden, reflektierenden Gegenständen anzugeben, bei denen unabhängig von den Reflexionseigenschaften der Gegenstände das Erreichen einer bestimmten Position exakt ermittelt wird.

Gelöst werden die genannten Aufgaben durch den kennzeichnenden Teil des Patentanspruchs 1 und durch den kennzeichnenden Teil des Patentanspruchs 2.

Die gegengleiche Regelung der Amplitude und der Frequenz des Sendesignals in der Weise, daß die Sendeleistung konstant gehalten wird, führt dazu, daß die Sendediode gleichmäßig belastet wird und damit eine längere Lebensdauer gegeben ist. Gleichzeitig ist die Menge des ausgesandten Lichtes auch bei einer Erniedrigung der Sendeamplitude konstant, da parallel die Frequenz erhöht wird. Das führt dazu, daß auch bei schlecht reflektierenden Gegenständen das Licht sichtbar bleibt, was beispielsweise wichtig für die Durchführung von Justiervorgängen ist.

Bei dem zweiten erfindungsgemäßen Verfahren wird durch die Regelung mittels des Summensignals aus dem ersten und zweiten Empfangssignal erreicht, daß die Steilheit des Differenzsignales im Bereich des Nulldurchgangs unabhängig von den Reflexionseigenschaften der abgetasteten Gegenstände konstant ist. Dadurch kann für alle Gegenstände eine exakte Bestimmung der Position durchgeführt werden, indem der schaltzeitpunkt durch einen Amplitudenwert des Differenzsignals vor und der Ausschaltzeitpunkt durch einen Amplitudenwert des Differenzsignals nach dem Nulldurchgang festgelegt wird. Aufgrund der gleichen Steilheit bei Gegenständen mit unterschiedlichen Reflexionseigenschaften werdem somit Ein- und Ausschaltzeitpunkt immer identisch bestimmt.

Nach einer vorteilhaften Ausführungsform der Verfahren wird die Amplitude des Sendesignals umgekehrt proportional zur Frequenz des Sendesignals geregelt. Dadurch wird erreicht, daß die Sendeleistung konstant gehalten wird.

Nach einer weiteren bevorzugten Ausführungsform wird die Amplitude des Sendesignals auf eine maximale Sendeamplitude begrenzt. Dadurch wird verhindert, daß die Sendediode durch einen zu hohen Sendestrom zerstört wird.

Nach einer weiteren bevorzugten Ausführungsform wird die Amplitude des Empfangssignals während der Taktperiode des entsprechenden Sendesignals gespeichert. Insbesondere wird die Amplitude des Empfangssignals durch ein Sample-and-Hold-Glied gespeichert. Anstelle eines Sample-and-Hold-Gliedes könnte jedoch zur Speicherung beispielsweise auch ein Mikroprozessor verwendet werden. Durch das Konstanthalten der Amplitude des Empfangssignals erhält man ein Gleichsignal, das besonders einfach zur Auswertung herangezogen werden kann.

Nach einer weiteren bevorzugten Ausführungsform wird das Empfangssignal bzw. das konstant gehaltene Empfangssignal in der Bandbreite begrenzt. Dazu kann das Empfangssignal über eine Tiefpaß geleitet werden, dessen Ausgangssignal zur Bestimmung der Lage des abgetasteten Gegenstandes verwendet wird. Es kann beispielsweise aber auch hier die Bandbreitenbegrenzung durch einen Mikroprozessor durchgeführt werden.

Die Begrenzung der Bandbreite des Empfangssignals führt zu einer deutlichen Verbesserung der Störunempfindlichkeit eines erfindungsgemäß ausgebildeten Verfahrens bzw. einer erfindungsgemäß ausgebildeten Vorrichtung. Störimpulse während der Dauer des Sendeimpulses bewirken eine Veränderung des Empfangssignals. Die Störimpulse können dabei entweder nach einer Reflexion an dem Gegenstand oder direkt auf den Empfänger einstrahlen. Im ersten Fall treten bei gut reflektierenden Gegenständen besonders störende Auswirkungen auf. Aufgrund der gleichzeitigen Sendestromreduzierung und der Erhöhung der Sendefrequenz wird jedoch auch das Sample-and-Hold-Glied entsprechend höherfrequent getaktet, wodurch der Störimpuls nur für kürzere Zeit am Tiefpaß anliegt und damit stark gedämpft wird.

Somit wird durch die gegengleiche Regelung der Sendeamplitude und Sendefrequenz bei gleichzeitiger Bandbreitenbegrenzung des Empfangssignals eine deutliche Verbesserung der Störsicherheit erreicht.

Nach einem weiteren vorteilhaften Verfahren wird der Sollwert so eingestellt, daß bei einer Reflexion der Tastpulse von einem dunklen Gegenstand die maximale Sendeamplitude eingestellt wird. Die maximale Sendeamplitude ist dabei durch den maximal zulässigen Sendestrom für die Sendediode vorgegeben. Durch diese Einstellung wird gewährleistet, daß bei allen Gegenständen, die ein besseres Reflexionsverhalten haben als ein dunkler Gegenstand, die Regelung eingreift und somit durch die Erhöhung der Sendefrequenz die verbesserte Störsicherheit erhalten wird. Es kann jedoch anstelle eines dunklen Gegenstandes zur Einstellung des Sollwertes auch ein hellerer Gegenstand verwendet werden. Dies ist insbesondere dann sinnvoll, wenn dunkle Gegenstände außerordentlich selten vorkommen und bezüglich dieser Gegenstände eine geringere Störunempfindlichkeit akzeptiert werden kann.

Nach einer weiteren bevorzugten Ausführungsform wird dem pulsförmigen Sendesignal ein Gleichsignal, insbesondere ein Gleichstrom überlagert. Dadurch kann erreicht werden, daß das ausgesandte Licht für die Durchführung von Justiervorgängen auch dann sichtbar bleibt, wenn bei einer Erniedrigung der Amplitude die Frequenz nicht mehr erhöht werden kann und somit die Menge des ausgesandten Lichtes ohne Gleichsignal zu dunkel wird.

Nach einer weiteren vorteilhaften Ausführungsform werden als Sender und/oder als Empfänger eine oder mehrere Leucht- bzw. Photodioden verwendet. Dadurch ist ein besonders einfacher Aufbau einer entsprechenden Vorrichtung möglich.

Nach einer weiteren vorteilhaften Ausführungsform wird zur Regelung der Amplitude und der Frequenz des Sendesignals ein Regler, insbesondere ein I-Regler verwendet. Durch die prinzipiell bedingte Verzögerung eines I-Reglers wird ein Schwingen der gesamten Anordnung verhindert.

Nach einer weiteren bevorzugten Ausführungsform wird das Ausgangssignal des Empfängers einem Verstärker zugeführt, wobei insbesondere die Frequenz des Sendesignals nach oben auf die Grenzfrequenz des Verstärkers begrenzt wird.

Nach einer weiteren vorteilhaften Ausführungsform wird die Differenz der beiden Empfangssignale gebildet und die Lage des Gegenstandes aus dem Differenzsignal bestimmt. Es ist vorteilhaft das Differenzsignal in der Bandbreite zu begrenzen, so daß eine erhöhte Störsicherheit erreicht wird. Eine bestimmte Lage des Gegenstandes kann dann durch den Nulldurchgang des Differenzsignals bzw. des in der Bandbreite begrenzten Differenzsignals erkannt werden. Die Lage kann aber auch durch einen vorbestimmten Wert der Amplitude des Differenzsignals erkannt werden, wobei insbesondere ein Amplitudenwert des Differenzsignals kurz vor oder kurz nach dem Nulldurchgang verwendet werden kann. Soll die Lage des Gegenstandes durch ein Ein- und ein Ausschaltsignal gekennzeichnet werden, so kann ein bestimmter Amplitudenwert vor dem Nulldurchgang als Einschaltsignal und ein zweiter Amplitudenwert nach dem Nulldurchgang als Ausschaltsignal verwendet werden.

In einer weiteren vorteilhaften Ausführungsform des Verfahrens kann die Lage des Gegenstandes aus der Amplitude des ersten oder des zweiten Empfangssignals bestimmt werden. Dieses kann dabei wieder in der Bandbreite begrenzt sein, um eine bessere Störsicherheit zu erreichen. Durch die Regelung der Sendeamplitude über die Summe der Empfangsamplituden weist nicht nur das Differenzsignal, sondern auch die beiden Empfangssignale selbst im Bereich des Nulldurchganges des Differenzsignales einen konstanten Verlauf unabhängig von den Reflexionseigenschaften des abgetasteten Gegenstandes auf. Damit kann auch ein Amplitudenwert des Empfangssignales direkt als Kennzeichen für das Erreichen einer bestimmten Position durch den Gegenstand verwendet werden.

Nach einer weiteren vorteilhaften Ausführungsform des Verfahrens werden Empfangssignale nur jeweils während der Dauer eines Sendeimpulses empfangen. Dadurch haben Störimpulse, die in dem Bereich zwischen zwei Sendeimpulsen auftreten, keine Auswirkung auf die Empfangssignale.

Nach einer bevorzugten Vorrichtung zur Durchführung des Verfahrens zur Regelung des pulsförmigen Sendesignals eines Triangulationstasters ist der Ausgang eines Pulsstromgenerators mit zumindest einem insbesondere als Leuchtdiode ausgebildeten Sender verbunden, der entsprechende Tastpulse, insbesondere Lichtpulse aussendet. Darüber hinaus ist zumindest ein insbesondere als Photodiode ausgebildeter Empfänger vorgesehen, der so angeordnet ist, daß er die von einem Gegenstand reflektierten Tastpulse empfängt, und dessen Ausgang an einem Verstärker angeschlossen ist, welchem ein Sample-and-Hold-Glied nachgeschaltet ist. Der Ausgang des Sample-and-Hold-Gliedes ist zum einen mit dem Regeleingang eines Reglers verbunden, an dessen Sollwerteingang ein einstellbarer Sollwert anliegt, wobei ein erster Ausgang des Reglers mit einem Frequenzsteuereingang und ein zweiter Ausgang des Reglers mit einem Amplitudensteuereingang des Pulsstromgenerators verbunden ist, und zum anderen über einen Tiefpaß mit dem Ausgang der Vorrichtung verbunden.

Eine bevorzugte Vorrichtung zur Durchführung des Verfahrens zur Bestimmung der Lage von sich bewegenden, reflektierenden Gegenständen mittels eines Triangulationstasters umfaßt einen Pulsstromgenerator, dessen Ausgang mit zumindest einem Sender, insbesondere einer Leuchtdiode verbunden ist, der entsprechende Tastpulse, insbesondere Lichtpulse aussendet. Weiterhin sind zumindest ein erster und ein zweiter Empfänger bzw. ein positionssensitiver Empfänger (PSD-Empfänger), dessen Ausgangssignale proportional zu der Lage des auftreffenden Lichtes sind, insbesondere Photodioden vorgesehen, die so angeordnet sind, daß sie die von einem Gegenstand reflektierten Tastpulse empfangen, und deren Ausgänge an Verstärker angeschlossen sind, welchen jeweils ein Sample-and-Hold-Glied nachgeschaltet ist. Der Ausgang des ersten Sample-and-Hold-Gliedes ist mit dem ersten Eingang eines Addierers und mit dem ersten Eingang eines Subtrahierers verbunden. Der Ausgang des zweiten Sample-and-Hold-Gliedes ist mit dem zweiten Eingang des Addierers und mit dem zweiten Eingang des Subtrahierers verbunden. Der Ausgang des Addierers ist an den Regeleingang eines Reglers angeschlossen, an dessen Sollwerteingang ein einstellbarer Sollwert anliegt, wobei ein erster Ausgang des Reglers mit einem Frequenzsteuereingang und eine zweiter Ausgang des Reglers mit einem Amplitudensteuereingang des Pulsstromgenerators verbunden ist. Der Ausgang des Subtrahierers ist über ein Tiefpaß mit dem Ausgang der Vorrichtung verbunden.

Weitere vorteilhafte Ausführungsformen der Erfindung sind in den Unteransprüchen angegeben.

Ein Vorteil der Erfindung liegt zum einen darin, daß eine deutliche Verbesserung der Störsicherheit erreicht werden kann. Zum anderen wird die Durchführung von Justiervorgängen auch bei herabgeregelter Sendeamplitude ermöglicht. Ein weiterer Vorteil eines Verfahrens und einer Vorrichtung zur Bestimmung der Lage von sich bewegenden, reflektierenden Gegenständen liegt darin, daß das Erreichen einer bestimmten Position eines Gegenstandes unabhängig von den Reflexionseigenschaften des Gegenstandes exakt bestimmt werden kann.

Die Erfindung wird nachfolgend anhand eines Ausführungsbeispiels unter Bezugnahme auf die Zeichnung erläutert; in dieser zeigt:
- Fig. 1: den schematischen Aufbau einer Vorrichtung zur Regelung des pulsförmigen Sendesignals eines Triangulationstasters,
- Fig. 2: verschiedene prinzipielle Verläufe der Sende- und Empfangssignale bei einer erfindungsgemäßen Regelung des Sendesignals,
- Fig. 3: den schematischen Aufbau einer Vorrichtung zur Bestimmung der Lage von sich bewegenden, reflektierenden Gegenständen,
- Fig. 4: den prinzipiellen Verlauf verschiedener Empfangssignale nach dem Stand der Technik und
- Fig. 5: den prinzipiellen Verlauf verschiedener Empfangssignale bei einer erfindungsgemäß ausgebildeten Vorrichtung.

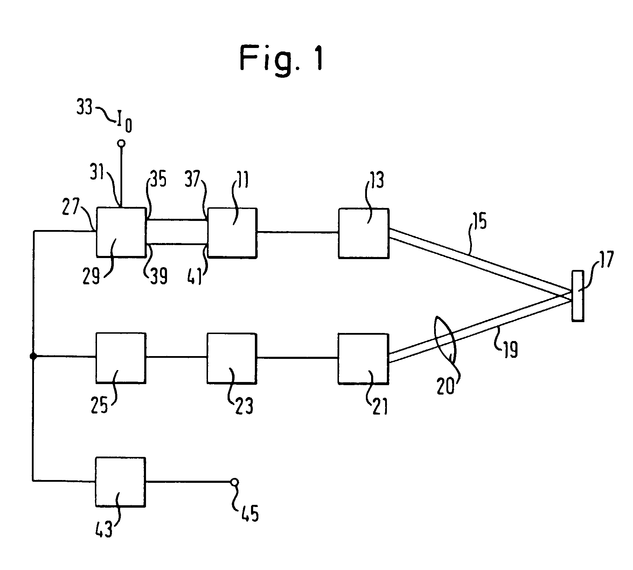

Fig. 1 zeigt einen Pulsstromgenerator 11, dessen Ausgang mit einem Sender, insbesondere einer Leuchtdiode 13 verbunden ist. Die Leuchtdiode 13 sendet entsprechende Lichtpulse 15 aus, die von einem Gegenstand 17 reflektiert werden, wobei die reflektierten Lichtpulse 19 von einer Linse 20 gebündelt und anschließend von einem Empfänger, insbesondere einer Photodiode 21 empfangen werden. Der Ausgang der Photodiode 21 ist mit dem Eingang eines Verstärkers 23 verbunden, dessen Ausgang an dem Eingang eines Sample-andHold-Gliedes 25 angeschlossen ist.

Der Ausgang des Sample-and-Hold-Gliedes 25 ist zum einen mit dem Regeleingang 27 eines Reglers 29 verbunden, an dessen Sollwerteingang 31 ein einstellbarer Sollwert 33 (I₀) anliegt. Ein erster Ausgang 35 des Reglers 29 ist mit einem Frequenzsteuereingang 37 und ein zweiter Ausgang 39 des Reglers 29 mit einem Amplitudensteuereingang 41 des Pulsstromgenerators 11 verbunden.

Zum anderen ist der Ausgang des Sample-and-Hold-Gliedes 25 mit dem Eingang eines Tiefpasses 43 verbunden, dessen Ausgang den Ausgang 45 der Vorrichtung bildet.

In einem Einstellvorgang wird der Sollwert 33 (I₀) so eingestellt, daß bei Reflexion der Lichtpulse 15 von einem dunklen Gegenstand 17 die Leuchtdiode 13 mit dem maximal möglichen Sendestrom versorgt wird. Dieser maximal mögliche Sendestrom ist durch die Leuchtdiode 13 vorgegeben.

Befindet sich kein Gegenstand 17 im Bereich der Lichtpulse 15, so wird ebenfalls der maximal mögliche Sendestrom eingestellt.

Tritt ein heller Gegenstand 17 in den Bereich der Lichtpulse 15 ein, so werden die reflektierten Lichtpulse 19 von der Photodiode 21 empfangen und in elektrische Signale umgewandelt, die eine höhere Amplitude aufweisen, als bei dem Justiervorgang mit dem dunklen Gegenstand 17. Diese elektrischen Impulse werden durch den Verstärker 23 verstärkt und dem Sample-and-Hold-Glied 25 zugeführt. Das Sample-and-Hold-Glied 25 hält jeweils die Amplitude eines Impulses bis zum Auftreten des nächsten Impulses konstant, so daß bei konstanter Impulshöhe eine Gleichsspannung und bei wechselnder Impulshöhe eine treppenförmige Spannung am Ausgang des Sample-and-Hold-Gliedes 25 anliegt. Dieses Ausgangssignal wird von dem Regler 29 mit dem Sollwert 33 (I₀) verglichen. Da der Sollwert 33 (I₀) bei Reflexion an einem dunklen Gegenstand 17 eingestellt wurde, wird bei der Reflexion der Lichtpulse 15 an einem helleren Gegenstand 17 der Sollwert 33 (I₀) vom Ausgangssignal des Sample-and-Hold-Gliedes 25 überschritten.

Daraufhin regelt der Regler 29 über den ersten Ausgang 35 und den Frequenzsteuereingang 37 des Pulsstromgenerators 11 die Amplitude der vom Pulsstromgenerator 11 erzeugten Sendestrompulse so herunter, daß die Amplitude des Ausgangssignals des Sample-and-Hold-Gliedes 25 gleich dem Sollwert 33 (I₀) wird.

Gleichzeitig regelt der Regler 29 über den zweiten Ausgang 39 und den Amplitudensteuereingang 41 des Pulsstromgenerators 11 die Frequenz des vom Pulsstromgenerator 11 erzeugten Sendesignals so herauf, daß die vom Pulsstromgenerator 11 abgegebene Leistung konstant bleibt.

Am Ausgang 45 der Vorrichtung liegt für helle wie auch für dunkle Gegenstände 17 somit ein Ausgangssignal mit gleicher Amplitude an, das entsprechend weiterverarbeitet werden kann.

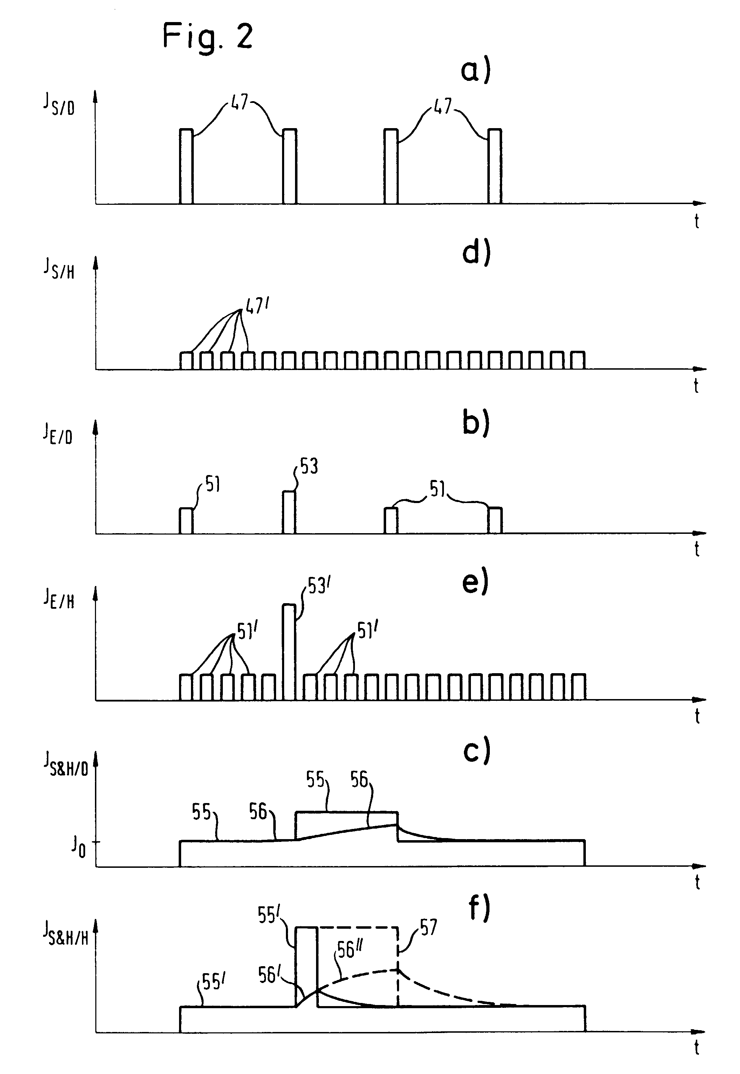

Anhand Fig. 2 werden im folgenden die Vorteile einer erfindungsgemäß ausgebildeten Vorrichtung und eines Verfahrens naher erläutert.

Fig. 2 a) zeigt Sendestrompulse 47, die von dem Pulsstromgenerator 11 bei einer Reflexion der Impulse 15 von einem dunklen Gegenstand 17 der Leuchtdiode 13 zugeführt werden.

Die von der Leuchtdiode 13 aufgrund der Sendestrompulse 47 erzeugten Lichtpulse 15 werden von dem dunklen Gegenstand 17 reflektiert, von der Photodiode 21 empfangen und in Empfangsstrompulse 51, 53, die in Fig. 2 b) gezeigt sind, umgewandelt. Der Empfangsstrompuls 53 weist dabei aufgrund eines auf den Gegenstand 17 auftreffenden und von diesem auf die Photodiode 21 reflektierten Störimpulses eine deutlich erhöhte Amplitude auf.

Die Empfangspulse 51, 53 werden von dem Verstärker 23 verstärkt und dem Sample-and-Hold-Glied 25 zugeführt, dessen Ausgangssignal 55 in Fig. 2 c) dargestellt ist. Die Amplitude des Ausgangssignals 55 entspricht dabei dem Sollwert 33 (I₀), wobei in Fig. 2 davon ausgegangen wird, daß der Einschwingvorgang der Regelung bereits beendet ist. Das ebenfalls in Fig. 2 c) dargestellte Ausgangssignal 56 des Tiefpasses 43 steigt aufgrund des erhöhten Empfangsstrompulses 53 zunächst an, fällt jedoch deutlich vor Erreichen der maximalen Amplitude aufgrund des nächsten Tastimpulses wieder ab.

Das Ausgangssignal 56 des Tiefpasses 43 liegt am Ausgang 45 der Vorrichtung an und kann zur Weiterverarbeitung verwendet werden.

Befindet sich anstelle eines dunklen Gegenstandes 17 ein heller Gegenstand 17 im Bereich der Lichtpulse 15, so wird durch eine erfindungsgemäße Regelung der Regler 29 den Pulsstromgenerator 11 so ansteuern, daß dieser die Amplitude der Sendestrompulse 47 verringert und deren Frequenz erhöht, so daß man Sendestrompulse 47' erhält, die in Fig. 2 d) dargestellt sind. In diesem Beispiel wurde ca. eine Verringerung der Amplitude um den Faktor 5 und eine entsprechende Erhöhung der Frequenz ebenfalls um den Faktor 5 gewählt. Dadurch erhält man im Vergleich zur Reflexion an einem dunklen Gegenstand 17, die in Fig. 2 a) dargestellt ist, dieselbe Sendeleistung, wodurch zum einen die Leuchtdiode 13 gleichmäßig belastet wird und zum anderen auch bei einer niedrigen Sendeamplitude die ausgestrahlte Lichtmenge konstant bleibt und damit ein Durchführen von Justiervorgängen weiterhin möglich ist.

Ein Vergleich der Fig. 2(a) mit der Fig. 2(d) zeigt, daß erfindungsgemäß unter der Frequenz des Sendesignals diejenige Frequenz verstanden wird, mit der sich die einzelnen sendeimpulse wiederholen.

Die Verringerung der Amplitude der Sendestrompulse 47' wird durch die erfindungsgemäße Regelung sc durchgeführt, daß die Empfangsstrompulse 51' (Fig. 2 e)) die gleiche Amplitude aufweisen, wie die Empfangsstrompulse 51 bei einem dunklen Gegenstand 17 (Fig. 2 b)). Da der Störimpuls in seiner Amplitude nicht beeinflußt wird, ist im Falle eines hellen Gegenstandes 17 der von dem Störpuls beeinflußte Empfangsstrompuls 53' deutlich höher als die Empfangsstrompulse 51'.

Fig. 2 f) zeigt das Ausgangssignal 55' des Sample-and-Hold-Gliedes 25 bei Reflexion an einem hellen Gegenstand 17, bei der der störungsbehaftete Empfangsstrompuls 53' über die verkürzte Periodendauer gehalten wird. Durch die Verkürzung der Periodendauer bzw. die Erhöhung der Sendefrequenz ist gewährleistet, daß Störimpulse nur während dieser kurzen Periodendauer einen Einfluß auf das Ausgangssignal 55' haben. Das Ausgangssignal 56' des nachgeschalteten Tiefpasses 43 steigt damit nur für diese verkürzte Periodendauer an und fällt anschließend aufgrund des nächsten Tastimpulses wieder ab. Das bedeutet, daß durch die Bandbreitenbegrenzung durch den Tiefpaß 43 hochfrequente Störsignale stark bedämpft werden.

Würde man bei einem hellen Gegenstand 17 lediglich die Amplitude der Sendestrompulse verringern ohne gleichzeitig die Frequenz zu erhöhen, so hätte der Störimpuls einen Verlauf des Ausgangssignals 55' entlang der gestrichelten Kurve 57 zur Folge. Dieser langanhaltende Störeffekt würde am Ausgang des Tiefpasses 43 anstelle des Verlaufes 56' den gestrichelt dargestellten Verlauf 56'' zur Folge haben und somit eine deutlich größere Störung des auszuwertenden Ausgangssignals bewirken.

Durch die erfindungsgemäße, gegenläufige Regelung der Amplitude und der Frequenz der Sendestromsignale wird also eine erhöhte Störsicherheit erreicht.

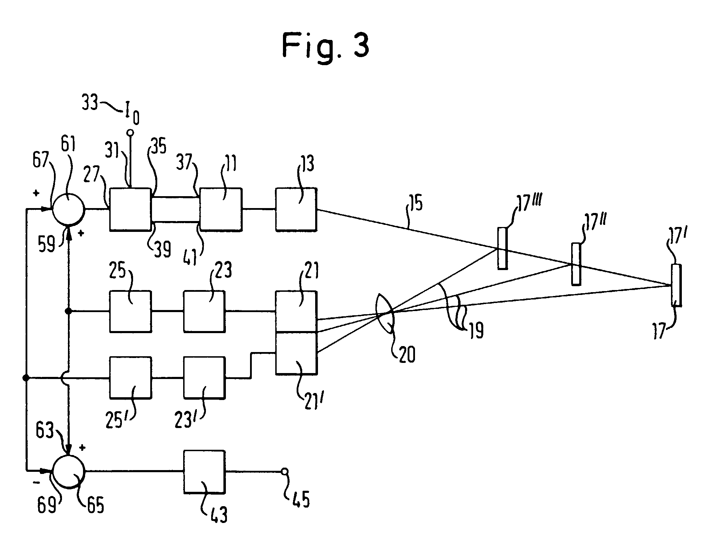

Fig. 3 zeigt den schematischen Aufbau einer Vorrichtung zur Bestimmung der Lage eines Gegenstandes 17. Dabei sind Teile, die den Teilen einer Vorrichtung nach Fig. 1 entsprechen, mit gleichbleibenden Ziffern bezeichnet. Der Ausgang des Pulsstromgenerators 11 ist mit dem Eingang der Leuchtdiode 13 verbunden, die Lichtpulse 15 aussendet. Die Lichtpulse 15 werden von einem Gegenstand 17 reflektiert, der sich beispielsweise auf einem nicht dargestellten Fließband in Bewegung befindet. Die unterschiedlichen Positionen des Gegenstandes 17 sind durch die Bezugszeichen 17', 17'' und 17''' bezeichnet.

Die von dem Gegenstand 17 reflektierten Lichtpulse 19 werden von zwei Photodioden 21, 21' empfangen und zwar jeweils abhängig von der Position des Gegenstandes 17. Jedem der Empfänger 21, 21' ist ein Verstärker 23, 23' und ein Sample-and-Hold-Glied 25, 25' nachgeschaltet. Der Ausgang des ersten Sample-and-Hold-Gliedes 25 ist mit dem ersten Eingang 59 eines Addierers 61 und mit dem ersten Eingang 63 eines Subtrahierers 65 verbunden. Der Ausgang des zweiten Sample-and-Hold-Gliedes 25' ist mit einem zweiten Eingang 67 des Addierers 61 und einem zweiten Eingang 69 des Subtrahierers 65 verbunden.

Der Ausgang des Addierers 61 ist an den Regeleingang 27 des Reglers 29 angeschlossen. Wie in Fig. 1 liegt an dem Sollwerteingang 31 des Reglers 29 ein Sollwert 33 (I₀) an und ist dessen erster Ausgang 35 mit dem Frequenzsteuereingang 37 und der zweite Ausgang 39 mit dem Amplitudensteuereingang 41 des Pulsstromgenerators 11 verbunden.

Der Ausgang des Subtrahierers 65 ist über den Tiefpaß 43 mit dem Ausgang 45 der Vorrichtung verbunden.

Mit einer erfindungsgemäß ausgebildeten Vorrichtung soll ein ich von Position 17' in Richtung Position 17''' bewegender Gegenstand 17 erfaßt werden und das Erreichen der Position 17'' erkannt werden.

Dazu werden zunächst in einem Einstellvorgang die Leuchtdiode 13 und die Photodioden 21 und 21' so ausgerichtet, daß die reflektierten Lichtpulse 19 je zur Hälfte auf die Photodioden 21 und 21' fallen, wenn sich der Gegenstand 17 in der Position 17'' befindet. Das bedeutet, daß die Ausgangssignale der Photodioden 21 und 21' in diesem Fall gleich groß sind.

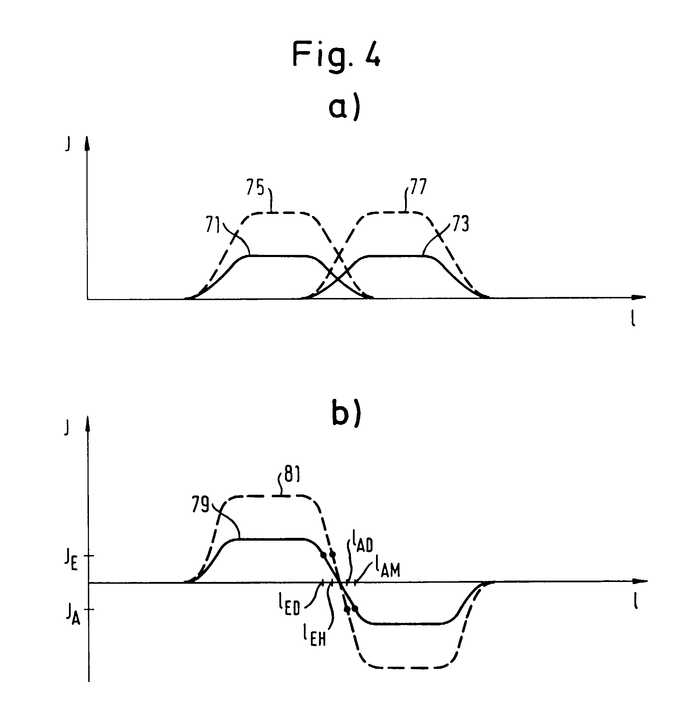

Mit Hilfe von Fig. 4 wird zunächst die Problematik einer Vorrichtung zur Erkennung der Lage eines sich bewegenden Gegenstandes nach dem Stand der Technik ohne Regelung des Sendestromes erläutert:

Fig. 4 a) zeigt die prinzipiellen Verläufe der Ausgangssignale der Sample-and-Hold-Glieder 25 und 25' für einen hellen und einen dunklen Gegenstand 17. Dabei gibt Signal 71 den Verlauf des Ausgangssignals des ersten Sample-and-Hold-Gliedes 25 für einen dunklen Gegenstand 17, Signal 73 den Verlauf des Ausgangssignals des zweiten Sample-and-Hold-Gliedes 25' für einen dunklen Gegenstand 17, Signal 75 den Verlauf des Ausgangssignals des ersten Sample-and-Hold-Gliedes 25 für einen hellen Gegenstand 17 und Signal 77 den Verlauf des Ausgangssignals des zweiten Sample-and-Hold-Gliedes 25' für einen hellen Gegenstand 17 ohne Regelung des Sendestromes an.

Betrachtet man zunächst den Fall des dunklen Gegenstandes 17, so wird kurz vor Erreichen der Position 17' der Empfänger 21 von einem Teil der reflektierten Lichtpulse 19 getroffen, wodurch das Ausgangssignal des ersten Sample-and-Hold-Gliedes 25 zu steigen beginnt. Das Ausgangssignal des Sample-and-Hold-Gliedes 25 steigt solange an, bis die reflektierten Lichtpulse 19 vollständig auf der ersten Photodiode 21 auftreffen. Durch die weitere Bewegung des Gegenstandes 17 in Richtung der Position 17'' überstreichen die reflektierten Lichtpulse 19 die erste Photodiode 21, was zu einem konstanten Ausgangssignal des ersten Sample-and-Hold-Gliedes 25 führt.

Kurz vor Erreichen der Position 17'' verläßt ein Teil der reflektierten Lichtpulse 19 die Photodiode 21 wodurch das Ausgangssignal des Sample-and-Hold-Gliedes 25 zu sinken beginnt, bis die reflektierten Lichtpulse 19 nicht mehr auf der ersten Photodiode 21 auftreffen und die Ausgangsspannung des Sample-and-Hold-Gliedes 25 zu Null wird.

Mit dem Abfall der Ausgangsspannung des ersten Sample-and-Hold-Gliedes 25 nimmt die Ausgangsspannung des zweiten Sample-and-Hold-Gliedes 25' entsprechend zu, da mit der Weiterbewegung des Gegenstandes 17 in Richtung der Position 17''' die zweite Photodiode 21' von den reflektierten Tastpulsen 19 überstrichen wird. Damit ergibt sich analog zum Signalverlauf 71 der Signalverlauf 73 der Ausgangsspannung des zweiten Sample-and-Hold-Gliedes 25'.

Bewegt sich anstelle eines dunklen Gegenstandes 17 ein heller Gegenstand 17 von der Position 17' in Richtung der Position 17''', so erhält man analog die Signalverläufe 75 und 77 der Ausgangssignale der Sample-and-Hold-Glieder 25 und 25'.

Bildet man jeweils die Differenzsignale der Ausgangssignale des ersten und zweiten Sample-and-Hold-Gliedes 25, 25' so erhält man die in Fig. 4 b) dargestellten Verläufe 79 für einen dunklen Gegenstand 17 und 81 für einen hellen Gegenstand 17. Diese Differenzsignale weisen im Bereich des Nulldurchgangs aufgrund der unterschiedlichen Amplituden eine unterschiedliche Steigung auf. Definiert man einen Einschaltzeitpunkt durch einen bestimmten Amplitudenwert I_{E} und einen Ausschaltzeitpunkt durch einen zweiten Amplitudenwert I_{A}, so erhält man abhängig von der Reflexionseigenschaft des untersuchten Gegenstandes unterschiedliche Orte, denen der Einschaltzeitpunkt bzw. der Ausschaltzeitpunkt zugeordnet wird. So wird beispielsweise bei der in Fig. 4 b) gewählten Einschaltamplitude I_{E} dieser Amplitudenwert bei einem dunklen Gegenstand 17 bereits an der Position l_{ED} erreicht, während bei einem hellen Gegenstand dieser Amplitudenwert erst an dem Ort l_{EH} erzielt wird. Das bedeutet, daß aufgrund der unterschiedlichen Reflexionseigenschaften der Gegenstände 17 keine exakte Bestimmung der Lage des Gegenstandes möglich ist.

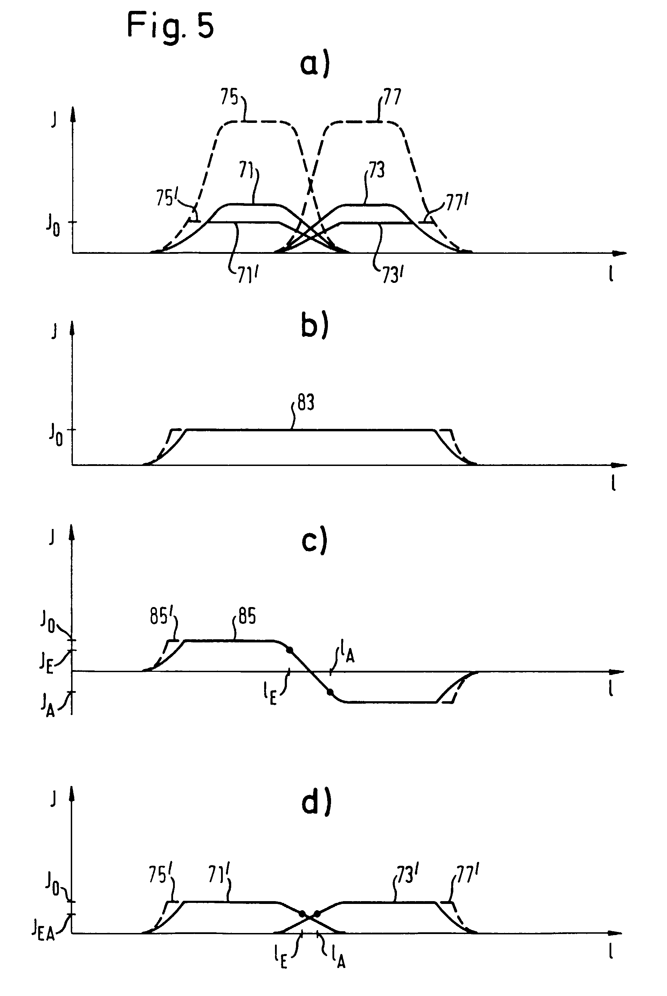

Fig. 5 a) zeigt den ungeregelten Verlauf 71, 73, 75, 77 der Ausgangssignale der beiden Sample-and-Hold-Glieder 25, 25' nach Fig. 4 a) und im Vergleich dazu die geregelten Verläufe 71', 73', 75' und 77' der Ausgangssignale der Sample-and-Hold-Glieder 25, 25' bei einer erfindungsgemäß ausgebildeten Regelung des Sendestroms.

Betrachtet man zunächst den Verlauf der Ausgangssignale 71' und 73' für einen dunklen Gegenstand 17 so steigt das Ausgangssignal 71 zunächst entlang des ungeregelten Ausgangssignals 71 an, bis der Wert den Sollwert 33 (I₀) erreicht. In diesem Moment beginnt die erfindungsgemäße Regelung und die Amplitude der Sendestrompulse 47 wird bei einer gleichzeitigen Erhöhung ihrer Frequenz so verringert, daß die Amplitude des Ausgangssignals des Sample-and-Hold-Gliedes 25 gleich dem Sollwert 33 (I₀) bleibt.

Wandert der reflektierte Lichtpulsstrahl 19 soweit, daß ein Teil von der Photodiode 21 auf die Photodiode 21' übergeht, so beginnt das Ausgangssignal 73' des zweiten Sample-and-Hold-Gliedes 25' anzusteigen während gleichzeitig das Ausgangssignal 71' des ersten Sample-and-Hold-Gliedes 25 zu sinken beginnt. Da der Regler 29 von dem Summensignal der beiden Ausgangssignale 71' und 73' gesteuert wird, ändert sich an der Amplitude der Sendestrompulse 47 nichts, da die Lichtmenge, die nicht mehr auf die Photodiode 21 fällt, jetzt auf die Photodiode 21' fällt und damit die einstrahlende Lichtmenge konstant bleibt.

Verläßt der reflektierte Lichtpulsstrahl 19 die Photodiode 21 vollständig und geht damit vollständig auf die zweite Photodiode 21' über, so wird damit das Ausgangssignal 71' zu Null und das Ausgangssignal 73' gleich I₀. Verläßt schließlich ein Teil des reflektierten Lichtpulsstrahls 19 die zweite Photodiode 21' so wird zunächst durch die erfindungsgemäße Regelung die Amplitude der Sendestrompulse 47 so erhöht, daß die Amplitude des Ausgangssignals 73 gleich dem Sollwert 33 (I₀) bleibt. Erreicht schließlich die Amplitude der Sendestrompulse 47 den maximal zulässigen Wert, wird dieser Wert gehalten bis schließlich die Amplitude des Ausgangssignals 73' zu Null abfällt, da der reflektierte Lichtpulsstrahl 19 die Empfangsfläche der Photodiode 21' verlassen hat.

Betrachtet man diese Regelung bei der Reflexion an einem hellen Gegenstand 17 so ergeben sich die gestrichelt dargestellten Verläufe 75' und 77'. Man erkennt, daß diese Verläufe sich nur in der Anfangs- und der Endphase von den geregelten Verläufen 71', 73' bei einem dunklen Gegenstand 17 unterscheiden. Insbesondere im Bereich des Übergangs von der ersten Photodiode 21 zu der zweiten Photodiode 21' ist der Verlauf der Signale 71', 73' und 75', 77' identisch.

Fig. 5 b) zeigt das Summensignal der Ausgangssignale des ersten und zweiten Sample-and-Hold-Gliedes 25, 25' für einen dunklen Gegenstand 17 in durchgezogenen Linien und den davon abweichenden Verlauf für einen hellen Gegenstand 17 in gestrichelten Linien. Man erkennt, daß das Summensignal 83, sobald es den Sollwert 33 (I₀) erreicht hat, konstant gehalten wird.

Fig. 5 c) zeigt die Differenzsignale 85, 85' der geregelten Ausgangssignale 71', 73' bzw. 75', 77' für einen dunklen Gegenstand 17 und einen hellen Gegenstand 17. Da der Verlauf der Signale 71' und 75' bzw. 73' und 77' im Mittelbereich identisch war, ergibt sich ein einheitlicher Verlauf für die Differenzsignale 85 und 85' um den Nulldurchgang. Das bedeutet, daß unabhängig von den Reflexionseigenschaften des abgetasteten Gegenstandes 17 eine einheitliche Einschaltamplitude I_{E} und Ausschaltamplitude I_{A} gewählt werden kann, mit der das Erreichen und Verlassen einer bestimmten Position des Gegenstandes 17 immer identisch angegeben werden kann.

Fig. 5 d) zeigt, daß auch anstelle der Differenzsignale 85, 85' direkt die Ausgangssignale 71', 73' bzw. 75', 77' zur Bestimmung der Lage des Gegenstandes 17 verwendet werden können. Da der Verlauf der Signale 71' und 75' bzw. 73' und 77' im Mittelbereich identisch ist, kann, wenn das Signal 71' bzw. 75' die Einschalt- bzw. Ausschaltamplitude I_{EA} erreicht, das Einschaltsignal gegeben werden bzw. wenn das Ausgangssignal 73' bzw. 77' die Ein- bzw. Ausschaltamplitude I_{EA} erreicht, ein Ausschaltsignal erzeugt werden. Dabei können Ein- und Ausschaltamplitude unterschiedlich gewählt werden.

Durch eine erfindungsgemäße Regelung ist also zum einen ein exaktes Bestimmen der Lage eines Gegenstandes 17 unabhängig von dessen Reflexionseigenschaften möglich. Zum anderen wird durch die gegenläufige Regelung der Sendestrompulsamplitude und Sendestromfrequenz eine erhöhte Störsicherheit erreicht, wie es bereits unter Bezugnahme auf Fig. 1 und Fig. 2 beschrieben wurde.

## Patentansprüche

1. Verfahren zum Betrieb einer insbesondere als Lichttaster ausgebildeten Sensoranordnung zur Feststellung von in einem Überwachungsbereich vorhandenen Gegenständen und/oder zur Feststellung deren Position, mit einem ein aus aufeinanderfolgenden Impulsen bestehendes Signal (15, 47, 47') in den Überwachungsbereich aussendenden Sender (13) und zumindest einem das empfangene Signal (19) verarbeitenden Empfänger (21), der in Abhängigkeit vom Vorhandensein eines Gegenstandes (17) im Überwachungsbereich ein Gegenstands-Feststellungssignal abgibt, wobei
die Amplitude des vom Empfänger (21) erzeugten Empfangssignals (51, 51') mit einem vorgebbaren Sollwert (33) oder einem Sollbereich verglichen wird und bei Über- bzw. Unterschreiten des Sollwerts (33) / Sollbereichs die Amplitude des Sendesignals so lange verringert bzw. erhöht wird, bis das Empfangssignal (51, 51') wieder den Sollwert / Sollbereich erreicht, dadurch gekennzeichnet, daß während der Verringerung bzw. Erhöhung der Sendeamplitude die Folge frequenz des Sendesignals gegenläufig erhöht bzw. verringert wird, so daß die Sendeleistung des Senders (13) im wesentlichen konstant bleibt.

2. Verfahren zum Betrieb eines insbesondere als Lichttaster ausgebildeten Triangulationstasters zur Feststellung von in einer vorgebbaren Entfernung zum Triangulationstaster befindlichen und sich relativ zu diesem bewegenden reflektierenden Gegenständen (17), mit einem ein aus aufeinanderfolgenden Impulsen bestehendes Signal (15) in Richtung des Gegenstandes (17) aussendenden Sender (13) und zumindest zwei, das vom Gegenstand (17) reflektierte Signal (19) nacheinander empfangenden, aneinander angrenzenden Empfängern (21, 21') bzw. zumindest einem positionssensitiven Empfänger (PSD-Empfänger), wobei in Abhängigkeit vom Vorhandensein eines Gegenstandes (17) in der vorgegebenen Entfernung von der Sensoranordnung ein Gegenstands-Feststellungssignal abgegeben wird, wobei
das Summensignal (83) der Amplituden der von den Empfängern (21, 21') erzeugten Empfangssignale (71', 73', 75', 77') erzeugt und dieses Summensignal (83) bzw. das Empfangssignal des PSD-Empfängers mit einem vorgebbaren Sollwert (33) oder einem Sollbereich verglichen wird und bei Über- bzw. Unterschreiten des Sollwerts (33) / Sollbereichs die Amplitude des Sendesignals (15, 47, 47'), so lang verringert oder erhöht wird, bis das Summensignal (83) bzw. das Empfangssignal des PSD-Empfängers wieder den Sollwert / Sollbereich erreicht, dadurch gekennzeichnet daß während der Verringerung bzw. Erhöhung der Sendeamplitude die Frequenz des Sendesignals (15, 47, 47') gegenläufig erhöht bzw. verringert wird, so daß die Sendeleistung des Senders (13) im wesentlichen konstant bleibt.

3. Verfahren nach Anspruch 1 oder 2,
dadurch **gekennzeichnet,**
daß die Amplitude des Sendesignals (47, 47') umgekehrt proportional zur Frequenz des Sendesignals (47, 47') geregelt wird.

4. Verfahren nach einem der vorhergehenden Ansprüche,
dadurch **gekennzeichnet,**
daß die Amplitude des Sendesignals (47, 47') auf eine maximale Sendeamplitude begrenzt wird.

5. Verfahren nach einem der vorhergehenden Ansprüche,
dadurch **gekennzeichnet,**
daß die Amplitude des Empfangsignals oder der Empfangssignale (71', 73', 75', 77') für die Dauer der Taktperiode des entsprechenden Sendesignals (47, 47') gespeichert wird.

6. Verfahren nach Anspruch 5,
dadurch **gekennzeichnet,**
daß die Amplitude des Empfangssignals oder der Empfangssignale (71', 73', 75', 77') durch ein Sample-and-Hold-Glied (25) für die Dauer der Taktperiode des entsprechenden Sendesignals (47, 47') gespeichert wird.

7. Verfahren nach einem der vorhergehenden Ansprüche,
dadurch **gekennzeichnet,**
daß das Empfangssignal (71', 73', 75', 77') in der Bandbreite begrenzt wird.

8. Verfahren nach einem der Ansprüche 2 bis 7
dadurch **gekennzeichnet,**
daß der Sollwert (33) so eingestellt wird, daß bei einer Reflexion der Signale (15, 19) von einem dunklen Gegenstand (17) die maximale Sendeamplitude eingestellt wird.

9. Verfahren nach einem der vorhergehenden Ansprüche,
dadurch **gekennzeichnet,**
daß dem pulsförmigen Sendesignal (47, 47') ein Gleichsi gnal, insbesondere ein Gleichstrom überlagert wird.

10. Verfahren nach einem der vorhergehenden Ansprüche,
dadurch **gekennzeichnet,**
daß als Sender (13) eine Leuchtdiode verwendet wird.

11. Verfahren nach einem der vorhergehenden Ansprüche,
dadurch **gekennzeichnet,**
daß als Empfänger (21, 21') eine oder mehrere Photodioden, insbesondere Photodiodenzeilen oder -arrays bzw. CCD-Zeilen oder -Arrays, verwendet werden.

12. Verfahren nach einem der vorhergehenden Ansprüche,
dadurch **gekennzeichnet,**
daß zur Regelung der Amplitude und der Frequenz des Sendesignals (47, 47') ein Regler (29), insbesondere ein I-Regler verwendet wird.

13. Verfahren nach einem der vorhergehenden Ansprüche,
dadurch **gekennzeichnet,**
daß das Ausgangssignal des Empfängers (21, 21') einem Verstärker (23, 23') zugeführt wird.

14. Verfahren nach einem der vorhergehenden Ansprüche,
dadurch **gekennzeichnet,**
daß die Frequenz des Sendesignals (47, 47') auf eine maximale Frequenz begrenzt wird.

15. Verfahren nach den Ansprüchen 13 und 14,
dadurch **gekennzeichnet,**
daß als maximale Frequenz des Sendesignals (47, 47') die Grenzfrequenz des Verstärkers (23, 23') gewählt wird.

16. Verfahren nach einem der Ansprüche 2 bis 15,
dadurch **gekennzeichnet,**
daß die Differenz (85, 85') der beiden Empfangssignale (71', 73', 75', 77') gebildet wird und die Lage des Gegenstandes (17) aus dem Differenzsignal (85, 85') stimmt wird.

17. Verfahren nach Anspruch 16,
dadurch **gekennzeichnet,**
daß das Differenzsignal (85, 85') in der Bandbreite begrenzt wird und aus dem bandbegrenzten Signal die Lage des Gegenstandes (17) bestimmt wird.

18. Verfahren nach den Ansprüchen 16 oder 17,
dadurch **gekennzeichnet,**
daß die vorgegebene Position des Gegenstandes (17) durch den Nulldurchgang des Differenzsignals (85. 85') bzw. des in der Bandbreite begrenzten Differenzsignals erkannt wird.

19. Verfahren nach den Ansprüchen 16 oder 17,
dadurch **gekennzeichnet,**
daß die vorgegebene Position des Gegenstandes (17) durch Erreichen eines vorbestimmten Wertes (I_{E}, I_{A}) durch das Differenzsignal (85, 85') bzw. das in der Bandbreite begrenzte Differenzsignal erkannt wird, wobei dieser vorbestimmte Wert (I_{E}, I_{A}) insbesondere so gewählt wird, daß er einem Wert des Differenzsignals (85, 85') bzw. des begrenzten Differenzsignals im Bereich seines Nulldurchgangs entspricht.

20. Verfahren nach einem der Ansprüche 2 bis 15,
dadurch **gekennzeichnet,**
daß die Lage des Gegenstandes (17) aus dem ersten oder einem weiteren Empfangssignal (71', 73', 75', 77') bestimmt wird.

21. Verfahren nach Anspruch 20,
dadurch **gekennzeichnet,**
daß zumindest eines der Empfangssignale (71', 73', 75', 77') in der Bandbreite begrenzt wird und aus dem bandbegrenzten Signal die Lage des Gegenstandes (17) stimmt wird.

22. Verfahren nach den Ansprüchen 20 oder 21,
dadurch **gekennzeichnet,**
daß die vorgegebene Position des Gegenstandes (17) durch einen vorbestimmten Wert (I_{E}, I_{A}, I_{EA} ) eines der Empfangssignale bzw. der bandbegrenzten Empfangssignale erkannt wird, wobei dieser vorbestimmte Wert (I_{E}, I_{A}, I_{EA} ) insbesondere so gewählt wird, daß er einem Istwert eines der Empfangssignale (71', 73', 75', 77') bzw. der bandbegrenzten Empfangssignale in demjenigen Bereich entspricht, in dem das eine Empfangssignal abfällt und das andere Empfangssignal ansteigt.

23. Verfahren nach einem der Ansprüche 7 bis 22,
dadurch **gekennzeichnet,**
daß zur Begrenzung der Bandbreite ein Tiefpaß (43) verwendet wird.

24. Verfahren nach einem oder mehreren der vorhergehenden Ansprüche,
dadurch **gekennzeichnet,**
daß nur jeweils während der Dauer eines Sende impulses (47, 47') Empfangssignale empfangen werden.

25. Vorrichtung zur Durchführung des Verfahrens nach einem oder mehreren der Ansprüche 1, 3 bis 15, 23 und 24, wobei
der Ausgang eines Pulsstromgenerators (11) mit zumindest einem insbesondere als Leuchtdiode ausgebildeten Sender (13) verbunden ist, der entsprechende Tastpulse (15), insbesondere Lichtpulse aussendet, daß zumindest ein insbesondere als Photodiode ausgebildeter Empfänger (21) vorgesehen ist, der so angeordnet ist, daß er die von einem Gegenstand (17) reflektierten Tastpulse (19) empfängt, und dessen Ausgang an einen Verstärker (23) angeschlossen ist, welchem ein Sample-and-Hold-Glied (25) nachgeschaltet ist, daß der Ausgang des Sample-and-Hold-Gliedes(25) zum einen über einen Tiefpaß (43) mit dem Ausgang (45) der Vorrichtung verbunden ist und zum anderen mit dem Regeleingang (27) eines Reglers (29), insbesondere eines I-Reglers, verbunden ist, an dessen Sollwerteingang (31) ein einstellbarer Sollwert (33) anliegt, wobei ein erster Ausgang (35) des Reglers (29) mit einem Frequenzsteuereingang (37) verbunden ist, dadurch gekennzeichnet, daß ein zweiter Ausgang (39) des Reglers (29) mit einem Amplitudensteuereingang (41) des Pulsstromgenerators (11) verbunden ist.

26. Vorrichtung zur Durchführung des Verfahrens nach den Ansprüchen 2 bis 24, wobei
der Ausgang eines Pulsstromgenerators (11) mit zumindest einem Sender (13), insbesondere einer Leuchtdiode verbunden ist, der entsprechende Tastpulse (15), insbesondere Lichtpulse aussendet, daß zumindest ein erster (21) und ein zweiter (21') Empfänger, insbesondere Photodioden, vorgesehen sind, die so angeordnet sind, daß sie die von einem Gegenstand (17) reflektierten Tastpulse (19) empfangen, und deren Ausgänge an Verstärker (23, 23') angeschlossen sind, welchen jeweils ein Sample-and-Hold-Glied (25, 25') nachgeschaltet ist, daß der Ausgang des ersten Sample-and-Hold-Gliedes (25) mit dem ersten Eingang (59) eines Addierers (61) und mit dem ersten Eingang (63) eines Subtrahierers (65) verbunden ist, daß der Ausgang des zweiten Sample-and-Hold-Gliedes (25') mit dem zweiten Eingang (67) des Addierers (61) und mit dem zweiten Eingang (69) des Subtrahierers (65) verbunden ist, daß der Ausgang des Addierers (61) an den Regeleingang (27) eines Reglers (29), insbesondere eines I-Reglers, angeschlossen ist, an dessen Sollwerteingang (31) ein einstellbarer Sollwert (33) anliegt, wobei ein erster Ausgang (35) des Reglers (29) mit einem Frequenzsteuereingang (37) verbunden ist, dadurch gekennzeichnet, daß ein zweiter Ausgang (39) des Reglers (29) mit einem Amplitudensteuereingang (41) des Pulsstromgenerators (11) verbunden ist, und daß der Ausgang des Subtrahierers (65) über einen Tiefpaß (43) mit dem Ausgang (45) der Vorrichtung verbunden ist.

## Claims

1. Method of operating a sensor arrangement, in particular formed as a light scanner, for the detection of objects present in a monitored region and/or for the detection of their position, with a transmitter (13) which transmits a signal (15, 47, 47') consisting of sequential pulses into the monitored region and with at least one receiver (21) which processes the received signal (19) and transmits an article detection signal in dependence on the presence of an article (17) in the monitored region, wherein the amplitude of the received signal (51, 51') generated by the receiver (21) is compared with a predetermined desired value (33) or a desired range and wherein, on exceeding or falling short of the desired value (33)/desired range, the amplitude of the transmitted signal is reduced or increased until the received signal (51, 51') again achieves the desired value/desired range, characterised in that during the reduction or increase of the transmitted amplitude, the sequence frequency of the transmitted signal is increased or reduced in the opposite sense so that the transmitted power of the transmitter (13) remains substantially constant.

2. Method of operating a triangulation sensor which is in particular formed as a light scanner for the detection of reflecting objects which are located at a predeterminable spacing from the triangulation sensor and move relative to the latter, with a transmitter (13) which transmits a signal consisting of sequential pulses in the direction of the article (17) and with at least two receivers (21, 21') which border one another and receive after one another the signal (19) reflected from the object (17), or at least one position sensitive receiver (PSD receiver), wherein, in dependence on the presence of an article (17) at the predetermined distance from the sensor arrangement, an article detection signal is transmitted, wherein the summed signal (83) of the amplitudes of the received signals (71', 73', 75', 77') generated by the receivers (21, 21') is produced and this summed signal (83) or the received signal of the PSD receiver are compared with a predeterminable desired value (33), or with a desired range, and wherein on exceeding or falling short of the desired value (33)/desired range the amplitude of the transmitted signal (15, 47, 47') is reduced or increased until the summed signal (83) or the received signal of the PSD receiver again achieves the desired value/desired range, characterised in that during the reduction or increase of the transmitted amplitude the frequency of the transmitted signal (15, 47, 47') is increased or reduced in the opposite sense so that the transmitted power of the transmitter (13) remains substantially constant.

3. Method in accordance with claim 1 or claim 2, characterised in that the amplitude of the transmitted signal (47, 47') is regulated inversely proportional to the frequency of the transmitted signal (47, 47').

4. Method in accordance with one of the preceding claims, characterised in that the amplitude of the transmitted signal (47, 47') is restricted to a maximum transmitted amplitude.

5. Method in accordance with one of the preceding claims, characterised in that the amplitude of the received signal or of the received signals (71', 73', 75', 77') is stored for the duration of the cycle period of the corresponding transmitted signal (47, 47').

6. Method in accordance with claim 5, characterised in that the amplitude of the received signal or of the received signals (71', 73', 75', 77') is stored by a sample and hold circuit (25) for the duration of the cycle periods of the corresponding transmitted signal (47, 47').

7. Method in accordance with one of the preceding claims, characterised in that the bandwidth of the received signal (71, 73', 75', 77') is restricted.

8. Method in accordance with one of the claims 2 to 7, characterised in that the desired value (33) is so set that with a reflection of the signals (15, 19) from a dark object (17) the maximum transmitted amplitude is set.

9. Method in accordance with one of the preceding claims, characterised in that a DC signal, in particular a DC current, is superimposed on the pulse-like transmitted signal (47, 47').

10. Method in accordance with one of the preceding claims, characterised in that a light-emitting diode is used as the transmitter (13).

11. Method in accordance with one of the preceding claims, characterised in that one or more photodiodes, in particular photodiode rows or arrays or CCD rows or arrays are used as receivers (21, 21').

12. Method in accordance with one of the preceding claims, characterised in that a controller (29), in particular an I-controller is used for the regulation of the amplitude and the frequency of the transmitted signal (47, 47').

13. Method in accordance with one of the preceding claims, characterised in that the output signal of the receiver (21, 21') is supplied to an amplifier (23, 23').

14. Method in accordance with one of the preceding claims, characterised in that the frequency of the transmitted signal (47, 47') is restricted to a maximum frequency.

15. Method in accordance with the claims 13 and 14, characterised in that the limiting frequency of the amplifier (23, 23') is selected as the maximum frequency of the transmitted signal (47, 47').

16. Method in accordance with one of the claims 2 to 15, characterised in that the difference (85, 85') of the two received signals (71', 73', 75', 77') is formed and the position of the object (17) is formed from the difference signal (85, 85').

17. Method in accordance with claim 16, characterised in that the bandwidth of the difference signal (85, 85') is restricted and the position of the article (17) is determined from the bandwidth restricted signal.

18. Method in accordance with claim 16 or 17, characterised in that the predetermined position of the article (17) is recognised by the zero passage of the difference signal (85, 85') or of the difference signal restricted in the bandwidth.

19. Method in accordance with claim 16 or 17, characterised in that the predetermined position of the article (17) is recognised by the difference signal (85, 85') or the difference signal of restricted bandwidth achieving a predetermined value (I_{E}, I_{A}), wherein this predetermined value (I_{E}, I_{A}) is in particular so selected that it corresponds to a value of the difference signal (85, 85') or of the restricted difference signal in the region of its zero passage.

20. Method in accordance with one of the claims 2 to 15, characterised in that the position of the article (17) is determined from the first received signal or from a further received signal (71', 73', 75', 77').

21. Method in accordance with claim 20, characterised in that at least one of the received signals (71', 73', 75', 77') is restricted in bandwidth and the position of the object (17) is determined from the band restricted signal.

22. Method in accordance with claim 20 or 21, characterised in that the predetermined position of the object (17) is recognised by a predetermined value (I_{E}, I_{A}, I_{EA}) of one of the received signals or of the band restricted received signals, wherein this predetermined value (I_{E}, I_{A}, I_{EA}) is in particular selected such that it corresponds to an actual value of one of the received signals (71', 73', 75', 77') or of the band restricted received signals in that region in which the one received signal is dropping off and the other received signal is increasing.

23. Method in accordance with one of the claims 7 to 22, characterised in that a low pass filter (43) is used for the restriction of the bandwidth.

24. Method in accordance with one or more of the preceding claims, characterised in that received signals are only received during the duration of a transmitted pulse (47, 47').

25. Apparatus for carrying out the method in accordance with one or more of the claims 1, 3 to 15, 23 and 24, wherein the output of a current pulse generator (11) is connected to at least one transmitter (13), which is in particular formed as a light emitting diode, which transmits the corresponding sensing pulses (15), in particular light pulses; in that at least one receiver (21), which is in particular formed as a photodiode, is provided and is so arranged that it receives the scanning pulses (19) reflected by the article (17) and its input is connected to an amplifier (23) which is followed by a sample-and-hold-circuit (25); in that the output of the sample-and-hold-circuit (25) is connected, on the one hand, via a low pass filter (43) to the output (45) of the apparatus and, on the other hand, to the regulating input (27) of a controller (29), in particular of an I-controller, at the desired value input (31) of which an adjustable desired value (33) is present, wherein a first output (35) of the controller (29) is connected to a frequency control input (37), characterised in that a second output (39) of the controller (29) is connected to an amplitude control input (41) of the current pulse generator (11).

26. Apparatus for carrying out the method in accordance with claims 2 to 24, wherein the output of a current pulse generator (11) is connected to at least one transmitter (13), in particular to a light emitting diode, which transmits corresponding sensing pulses (15), in particular light pulses; in that at least one first (21) or one second (21') receiver, in particular photodiodes, are provided which are so arranged that they receive sensing pulses (19) reflected by an object (17) and their outputs are connected to amplifiers (23, 23') which are each followed by a sample-and-hold-circuit (25, 25'); in that the output of the first sample-and-hold-circuit (25) is connected to the first input (59) of an adder (61) and to the first input (63) of a subtractor (65); in that the output of the second sample-and-hold-circuit (25') is connected to the second input (67) of the adder (67) and to the second input (69) of the subtractor (65); in that the output of the adder (61) is connected to the regulating input (27) or controller (29), in particular of an I-controller, at the desired value input (31) of which an adjustable desired value (33) is present, wherein a first output (35) of the controller (29) is connected to a frequency control input (37), characterised in that a second output (39) of the controller (29) is connected to an amplitude control input (41) of the current pulse generator (11); and in that the output of the subtractor (65) is connected via a low pass filter (43) to the output (45) of the apparatus.

## Revendications

1. Procédé pour l'exploitation d'un arrangement capteur conçu en particulier comme détecteur à spot pour la constatation de la présence d'objets existants dans une zone de contrôle et/ou pour la détermination de leur position, avec un émetteur (13) émettant un signal (15, 47, 47') comprenant des impulsions successives dans la zone de contrôle et d'au moins un récepteur (21) traitant le signal (19) reçu, qui délivre un signal de constatation de présence d'objets en fonction de la présence d'un objet (17) dans la zone de contrôle, l'amplitude du signal de réception (51, 51') généré par le récepteur (21) étant comparée avec une valeur de consigne (33) prédéfinissable ou une plage prescrite et, en cas de dépassement positif ou négatif de la valeur de consigne (33)/plage prescrite, l'amplitude du signal d'émission étant réduite ou augmentée jusqu'à ce que le signal de réception (51, 51') atteigne de nouveau la valeur de consigne/plage prescrite, caractérisé en ce que, pendant la réduction ou l'augmentation de l'amplitude d'émission, la fréquence de répétition du signal d'émission est augmentée ou réduite dans le sens opposé, de façon que la puissance d'émission de l'émetteur (13) reste sensiblement constante.

2. Procédé pour l'exploitation d'un détecteur à triangulation conçu en particulier comme un détecteur à spot pour la constatation de la présence d'objets (17) réfléchissants situés à une distance prédéfinissable par rapport au détecteur à triangulation et se déplaçant par rapport à celui-ci, avec un émetteur (13) émettant un signal (15) comprenant des impulsions successives dans la direction de l'objet (17) et au moins deux récepteurs (21, 21') recevant l'un après l'autre le signal (19) réfléchi par l'objet (17) et contigus et au moins un récepteur (récepteur PSD) sensible à la position, un signal de constatation de présence d'objet étant délivré en fonction de la présence d'un objet (17) à la distance spécifiée par rapport à l'arrangement capteur, le signal cumulé (83) des amplitudes des signaux de réception (71', 73', 75', 77') générés par les récepteurs (21, 21') étant généré et ce signal cumulé (83) ou le signal de réception du récepteur PSD étant comparé avec une valeur de consigne (33) prédéfinissable ou une plage prescrite et, en cas de dépassement positif ou négatif de la valeur de consigne (33)/plage prescrite, l'amplitude du signal d'émission (15, 47, 47'), étant réduite ou augmentée jusqu'à ce que le signal cumulé (83) ou le signal de réception du récepteur PSD ait atteint de nouveau la valeur de consigne/plage prescrite, caractérisé en ce que, pendant la réduction ou l'augmentation de l'amplitude d'émission, la fréquence du signal d'émission (15, 47, 47') est augmentée ou réduite dans le sens opposé, de façon que la puissance d'émission de l'émetteur (13) reste sensiblement constante.

3. Procédé selon la revendication 1 ou 2, caractérisé en ce que l'amplitude du signal d'émission (47, 47') est réglée de façon inversement proportionnelle à la fréquence du signal d'émission (47, 47').

4. Procédé selon l'une quelconque des revendications précédentes, caractérisé en ce que l'amplitude du signal d'émission (47, 47') est limitée à une amplitude d'émission maximale.

5. Procédé selon l'une quelconque des revendications précédentes, caractérisé en ce que l'amplitude du signal de réception ou des signaux de réception (71', 73', 75', 77') est mémorisée pour la durée de la période de rythme du signal d'émission (47, 47') correspondant.

6. Procédé selon la revendication 5, caractérisé en ce que l'amplitude du signal de réception ou des signaux de réception (71', 73', 75', 77') est mémorisée par un élément Sample-and-Hold (25) pour la durée de la période de rythme du signal d'émission (47, 47') correspondant.

7. Procédé selon l'une quelconque des revendications précédentes, caractérisé en ce que le signal de réception (71', 73', 75', 77') est limité dans la largeur de bande.

8. Procédé selon l'une quelconque des revendications 2 à 7, caractérisé en ce que la valeur de consigne (33) est ajustée de façon que l'amplitude d'émission maximale est ajustée dans le cas d'une réflexion des signaux (15, 19) par un objet (17) foncé.

9. Procédé selon l'une quelconque des revendications précédentes, caractérisé en ce qu'un signal continu, en particulier un courant continu est superposé au signal d'émission (47, 47') en forme d'impulsion.

10. Procédé selon l'une quelconque des revendications précédentes, caractérisé en ce qu'une diode électroluminescente est utilisée comme émetteur (13).

11. Procédé selon l'une quelconque des revendications précédentes, caractérisé en ce qu'on utilise comme récepteur (21, 21') une ou plusieurs photodiodes, en particulier des rangées ou réseaux de photodiodes et des barrettes CCD ou des réseaux CCD.

12. Procédé selon l'une quelconque des revendications précédentes, caractérisé en ce qu'on utilise un régulateur (29), en particulier un régulateur intégral, pour la régulation de l'amplitude et de la fréquence du signal d'émission (47, 47').

13. Procédé selon l'une quelconque des revendications précédente, caractérisé en ce que le signal de sortie du récepteur (21, 21) est amené à un amplificateur (23, 23').

14. Procédé selon l'une quelconque des revendications précédentes, caractérisé en ce que la fréquence du signal d'émission (47, 47') est limitée à une fréquence maximale.

15. Procédé selon les revendications 13 et 14, caractérisé en ce que la fréquence limite de l'amplificateur (23, 23') est choisie comme fréquence maximale du signal d'émission (47, 47').

16. Procédé selon l'une quelconque des revendications 2 à 15, caractérisé en ce que la différence (85, 85') des deux signaux de réception (71', 73', 75', 77') est formée et l'emplacement de l'objet (17) est déterminé à partir du signal différentiel (85, 85').

17. Procédé selon la revendication 16, caractérisé en ce que le signal différentiel (85, 85') est limité dans la largeur de bande et l'emplacement de l'objet (17) est déterminé à partir du signal limité en bande.

18. Procédé selon les revendications 16 ou 17, caractérisé en ce que la position spécifiée de l'objet (17) est reconnue par le passage par zéro du signal différentiel (85, 85') ou du signal différentiel limité dans la largeur de bande.

19. Procédé selon les revendications 16 ou 17, caractérisé en ce que la position spécifiée de l'objet (17) est reconnue lorsque le signal différentiel (85, 85') ou le signal différentiel limité dans la largeur de bande atteint une valeur (I_{E}, I_{A}) prédéfinie, cette valeur (I_{E}, I_{A}) prédéfinie étant choisie en particulier de façon qu'elle corresponde à une valeur du signal différentiel (85, 85') ou du signal différentiel limité dans la plage de son passage par zéro.

20. Procédé selon l'une quelconque des revendications 2 à 15, caractérisé en ce que l'emplacement de l'objet (17) est déterminé à partir du premier ou d'un autre signal de réception (71', 73', 75', 77').

21. Procédé selon la revendication 20, caractérisée en ce qu'au moins l'un des signaux de réception (71', 73', 75', 77') est limité dans la largeur de bande et l'emplacement de l'objet (17) est calculé à partir du signal limité en bande.

22. Procédé selon les revendications 20 ou 21, caractérisé en ce que la position spécifiée de l'objet (17) est reconnue par une valeur (I_{E},I_{A,}I_{EA}) prédéfinie de l'un des signaux de réception ou des signaux de réception limités en bande, cette valeur (I_{E},I_{A,}I_{EA}) prédéfinie étant choisie en particulier de façon qu'elle corresponde à une valeur réelle de l'un des signaux de réception (71', 73', 75', 77') ou des signaux de réception limités en bande dans la plage où un signal de réception décroît et l'autre signal de réflexion croît.

23. Procédé selon l'une quelconque des revendications 7 à 22, caractérisé en ce qu'un filtre passe-bas (43) est utilisé pour la limitation de la largeur de bande.

24. Procédé selon l'une ou plusieurs des revendications précédentes, caractérisé en ce que des signaux de réception sont reçus seulement pendant la durée d'une impulsion d'émission (47, 47').

25. Dispositif pour l'application du procédé selon l'une ou plusieurs des revendications 1, 3 à 15, 23 et 24, la sortie d'un générateur de courant d'impulsion (11) étant reliée à au moins un émetteur (13) conçu en particulier comme diode électroluminescente, qui émet des impulsions de rythme (15) appropriées, en particulier des impulsions lumineuses, en ce qu'il est prévu au moins un récepteur (21) conçu en particulier comme une photodiode, qui est disposé de façon qu'il reçoive les impulsions de rythme (19) réfléchies par un objet (17), et dont la sortie est raccordée à un amplificateur (23) derrière lequel est monté un élément Sample-and-hold (25), en ce que la sortie de l'élément Sample-and-hold (25) est reliée d'une part par un filtre passe-bas (43) à la sortie (45) du dispositif et d'autre part à l'entrée de réglage (27) d'un régulateur (29), en particulier d'un régulateur intégral, dont l'entrée de valeur de consigne (31) est soumise à l'application d'une valeur de consigne (33) ajustable, une première sortie (35) du régulateur (29) étant relié à une entrée de commande de fréquence (37), caractérisé en ce qu'une deuxième sortie (39) du régulateur (29) est reliée à une entrée de commande d'amplitude (41) du générateur de courant d'impulsion (11).

26. Dispositif pour l'application du procédé selon les revendications 2 à 24, caractérisé en ce que la sortie d'un générateur d'impulsions (11) est reliée à au moins un émetteur (13), en particulier une diode électroluminescente, qui émet des impulsions de rythme (15) appropriées, en particulier des impulsions lumineuses, en ce qu'il est prévu au moins un premier récepteur (21) et un deuxième récepteur (21'), en particulier des photodiodes, qui sont disposés de façon qu'ils reçoivent les impulsions de rythme (19) réfléchies par un objet (17), et leurs sorties sont raccordées à des amplificateurs (23, 23'), derrière chacun desquels est placé un élément Sample-and-Hold (25, 25'), en ce que la sortie du premier élément Sample-and-Hold (25) est reliée à la première entrée (59) d'un additionneur (61) et à la première entrée (63) d'un soustracteur (65), en ce que la sortie du deuxième élément Sample-and-Hold (25') est reliée à la deuxième entrée (67) de l'additionneur (61) et à la deuxième entrée (69) du soustracteur (65), en ce que la sortie de l'additionneur (61) est raccordée à l'entrée de réglage (27) d'un régulateur (29), en particulier d'un régulateur intégral, dont l'entrée de valeur de consigne (31) est soumise à l'application d'une valeur de consigne (33) ajustable, une première sortie (35) du régulateur (29) étant reliée à une entrée de commande de fréquence (37), caractérisé en ce qu'une deuxième sortie (39) du régulateur (29) est reliée à une entrée de commande d'amplitude (41) du générateur de courant d'impulsion (11), et en ce que la sortie du soustracteur (65) est reliée par un filtre passe-bas (43) à la sortie (45) du dispositif.
